# EUROPÄISCHE PATENTSCHRIFT

(11) **EP 2 020 624 B1**
(45) Veröffentlichungstag und Bekanntmachung des Hinweises auf die Patenterteilung: **01.12.2010**
(21) Anmeldenummer: 07015226.9
(22) Anmeldetag: 02.08.2007
(51) Int. Cl.: G05B 19/406, G08C 17/02, F16P 3/14, B25J 9/16

(54) **Mobiles Bediengerät und Verfahren zu seinem Einsatz**
Mobile operator device and method for its use
Organe de commande mobile et son procédé d'utilisation

(43) Veröffentlichungstag der Anmeldung: 04.02.2009
(73) Patentinhaber: SIEMENS AKTIENGESELLSCHAFT, 80333 München (DE)
(72) Erfinder: Griessnig, Gerhard, 8010 Graz (AT)

(56) Entgegenhaltungen:
- WO-A-2006/000571
- WO-A-2006/105567
- US-A1- 2001 035 729

## Beschreibung

Die Erfindung betrifft ein Verfahren zum Einsatz eines mobilen Bediengeräts, das ein Lesegerät zum Empfang von Funksignalen und eine Auswerteeinheit zur Auswertung der Funksignale aufweist und mit dem mindestens eine Maschine sicherheitsrelevant in einer Anlage bedienbar ist, wobei die Bedienung innerhalb eines der Maschine zugeordneten Wirkbereichs erfolgt, der von einem oder mehreren RFID-Transpondern begrenzt werden, wobei die Funksignale von einem im Empfangsbereich des Lesegeräts befindlichen RFID-Transponder vom Lesegerät empfangen werden und wobei die Auswerteeinheit die Funksignale erhält und daraus die Identifikationsnummer dieses RFID-Transponders und seinen Abstand zum Bediengerät bestimmt und diese Daten an ein Sicherheitsmodul im Bediengerät weiter leitet.

Die Erfindung betrifft außerdem ein mobiles Bediengerät mit einem Lesegerät zum Empfang der von RFID-Transpondern in einer Anlage ausgesendeten Funksignale und mit einer Auswerteeinheit zur Auswertung dieser Funksignale und mit dem mindestens eine Maschine sicherheitsrelevant in der Anlage bedienbar ist, wobei die Bedienung innerhalb eines der Maschine zugeordneten Wirkbereichs vorgesehen ist, der von einem oder mehreren RFID-Transpondern begrenzt wird, wobei die Auswerteeinheit zur Bestimmung der Identifikationsnummer und des Abstands des jeweiligen RFID-Transponders zum Bediengerät aus den zu diesem vom Lesegerät empfangenen Funksignalen dient, und wobei der Auswerteeinheit ein Sicherheitsmodul nachgeschaltet ist, das zur Überprüfung der korrekten Funktion des Bediengeräts hinsichtlich Übertragung und Auswertung der empfangenen Funksignale in der Übertragungskette Lesegerät - Auswerteeinheit - Sicherheitsmodul dient.

Ein derartiges Verfahren und mobiles Bediengerät sind aus der WO 2006/105567 A bekannt. Das Dokument offenbart ein Verfahren sowie eine Vorrichtung zur sicheren, verwechslungsfreien und ausschließlichen Zuordnung der Befehlsgewalt einer Bedienperson zu einer steuerbaren technischen Einrichtung.

Es ist nicht zulässig, gefahrbringende Aktionen an Maschinen/Anlage im sicherheitsrelevanten Umfeld von jedem Ort aus durchzuführen. Die Bedienung dieser Anlagen war bisher nur an stationären Punkten oder mit kabelgebundenen Geräten möglich. Diese limitierenden Faktoren sind allerdings durch die Drahtlos-Übertragungstechniken aufgehoben. Um den Anforderungen an die Sicherheitstechnik gerecht zu werden, müssen Bereiche technisch definiert werden und es muss eine eindeutige Zuordnung zu diesen Bereichen stattfinden. Es ist bereits bekannt, entsprechende Wirkbereiche zu definieren, innerhalb derer die Bedienung einer Maschine mittels eines Bediengerätes drahtlos erfolgt. Dabei werden die Wirkbereiche von einem oder mehreren RFID-Transpondern begrenzt. An die Anwendung solcher Bediengeräte im Zusammenhang mit der Funktion der Wirkbereiche werden hohe Anforderungen bezüglich Sicherheit gestellt. Derartige Bediengeräte werden zur Einsparung von Kosten und Entwicklung möglichst nach einem Standardprozess mit standardmäßig verfügbaren Komponenten entwickelt. Dennoch sollen diese Komponenten in Sicherheitsfunktion eingebunden werden.

Daher liegt der Erfindung die Aufgabe zugrunde, ein Verfahren der oben genannten Art vorzuschlagen, mit dem sichergestellt wird, dass die vom Bediengerät empfangenen Funksignale korrekt verarbeitet werden, um einen Einsatz im sicherheitsrelevanten Bereich zu ermöglichen.

Weiterhin liegt der Erfindung die Aufgabe zugrunde, ein Bediengerät der oben genannten Art vorzuschlagen, mit dem die korrekte Weiterverarbeitung der empfangenen Funksignale sichergestellt wird, um einen Einsatz des Bediengerätes im sicherheitsrelevanten Umfeld zu ermöglichen.

Dabei ist es Ziel, die gesamte Übertragungskette von Hardware- und Softwarekomponenten zur Ermittlung von Transponderdaten zu überprüfen.

Die erste Aufgabe wird mit einem Verfahren mit den Merkmalen gemäß Anspruch 1 gelöst. Die weitere Aufgabe wird durch ein mobiles Bediengerät mit den Merkmalen nach Anspruch 8 gelöst.

Vorteilhafte Weiterbildungen der Erfindung sind den Unteransprüchen zu entnehmen.

Eine besonders vorteilhafte Weiterbildung des erfindungsgemäßen Verfahrens besteht, wenn die Referenztransponder durch Aufmodulation entsprechender Referenztranspondersignale im Lesegerät simuliert werden.

Weiterhin ist es vorteilhaft, wenn einem ersten und einem zweiten der Referenztransponder jeweils eine Identifikationsnummer zugeordnet wird und durch diese beiden Identifikationsnummern der gesamte Bereich von Identifikationsnummer der in der Anlage befindlichen RFID-Transponder abgedeckt wird.

Werden gemäß Anspruch 4 die im Lesegerät aufmodulierten Referenztranspondersignale der Referenztransponder durch dem Lesegerät nachgeschaltete Mittel verzögert, durch die ein zusätzlicher Abstand simuliert wird, kann auf diese Weise einfach die korrekte Abstandsmessung und Auswertung der Abstandsmessung überprüft werden. Die bekannte Verzögerung hat nämlich einen zusätzlichen definierten Abstand zur Folge.

Werden die Referenztranspondersignale des ersten Referenztransponders und die des zweiten Referenztransponders alternierend im Lesegerät aufmoduliert, ist es damit möglich, ein eventuelles Einfrieren eines Bits aufzudecken.

Von besonderem Vorteil ist außerdem, wenn gemäß Anspruch 6 im Sicherheitsmodul für den ersten Referenztransponder Erwartungswerte hinsichtlich der Identifikationsnummer und der Abstände mit und ohne Verzögerung der Referenztranspondersignale vorliegen, die mit über die Übertragungskette ermittelten Daten hinsichtlich der Identifikationsnummer und der Abstände mit und ohne Verzögerung verglichen werden. Auf diese Weise ist es möglich, die gesamte Übertragungskette von Hardware- und Softwarekomponenten zur Ermittlung der Transponderdaten zu überprüfen.

Schließlich erweist es sich auch als besonders vorteilhaft, wenn gemäß Anspruch 7 für den zweiten Referenztransponder einer der beiden Erwartungswerte für den Abstand mit und ohne Verzögerung mathematisch aus einem der beiden gemessenen Abstandswerte und dem jeweils anderen der beiden Erwartungswerte für den Abstand mit und ohne Verzögerung bestimmt wird. Mit diesen Verfahrensschritten ist es auf einfache Weise möglich, z.B. "Stuck-AT-Fehler" aufzudecken.

Weitere vorteilhafte Ausbildungen des mobilen Bediengeräts nach Anspruch 8 sind den Unteransprüchen 9 bis 12 zu entnehmen.

Ein Ausführungsbeispiel der Erfindung wird im Folgenden anhand einer Zeichnung näher erläutert. Es zeigen:
- FIG 1: ein System mit einem mobilen, drahtlos kommunizierenden Bediengerät zum Bedienen von Maschinen in sicherheitsrelevantem Umfeld,

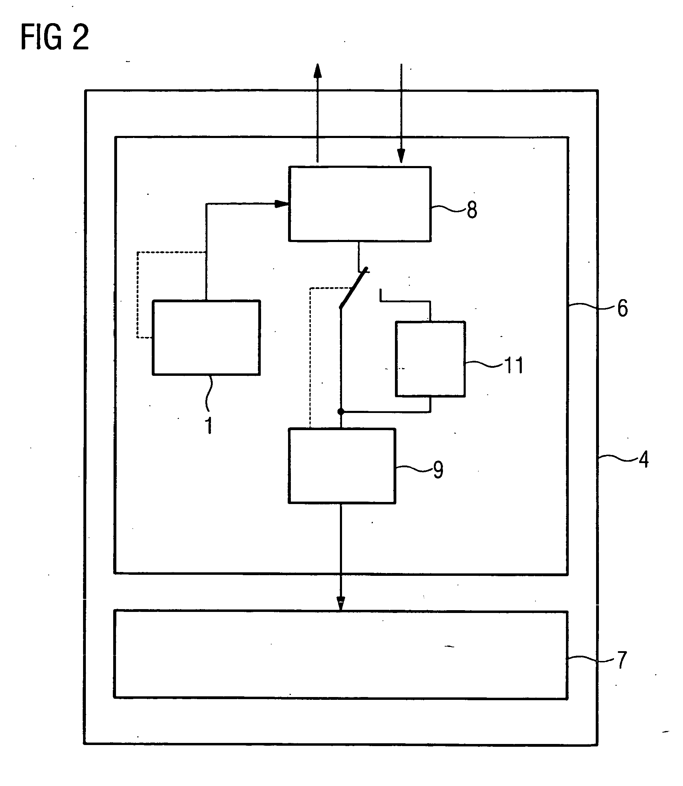

- FIG 2: ein erfindungsgemäßes Bediengerät,
- FIG 3: eine Tabelle mit den Referenzwerten eines ersten Referenztransponders und
- FIG 4: eine Tabelle mit den Referenzwerten eines zweiten Referenztransponders.

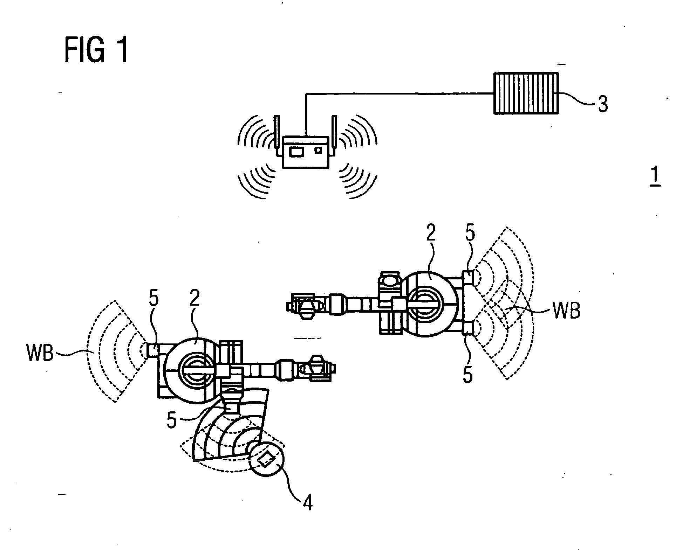

In FIG 1 ist ein System zum Bedienen von Maschinen 2 oder Anlagen dargestellt. Das System 1 weist eine Steuerung 3 und ein mobiles Bediengerät 4 auf, das über Mittel zur drahtlosen Kommunikation, hier speziell eine RFID-Funkverbindung (**R**adio **F**requency **I**dentification), mit der Steuerung 3 verfügt.

### Befehlssignale über WLAN

Die Bedienung der Maschinen 2 ist nur nach Anmeldung in bestimmten Wirkbereichen, die über spezielle RFID-Transponder 5 aufgespannt sind, zulässig. Erst nach einer Anmeldung in diesen Wirkbereichen können gefahrbringende Aktionen, z.B. Verfahren von Maschinen, durchgeführt werden.

Um den Anforderungen der Sicherheitstechnik gerecht zu werden, müssen Bereiche technisch definiert werden, und es muss eine eindeutige Zuordnung zu diesen Bereichen stattfinden. Dementsprechend sind für das System 1 die Wirkbereiche WB definiert, die von einem oder mehreren RFID-Transpondern 5 aufgespannt werden. Dabei ist die räumliche Definition der Wirkbereiche WB durch die Antennencharakteristik der RFID-Transponder 5 sowie durch den projektierbaren maximalen Abstand des mobilen Bediengeräts 4 zu dem betreffenden RFID-Transponder 5 bestimmt.

Das mobile sicherheitsrelevante Bediengerät 4 weist nicht sicherheitsrelevante Hardware- und Softwarekomponenten in einem Wirkbereichsmodul 6 auf, das durch ein Sicherheitsmodul 7 mit Sicherheitsmaßnahmen unterstützt wird. Mit diesem Sicherheitsmodul 7 wird überprüft und sichergestellt, dass die Auswertung der im Wirkbereich WB empfangenen Funksignale korrekt sind. Das Wirkbereichsmodul 6 weist ein Lesegerät 8 zum Empfang von Funksignalen auf sowie eine Auswerteeinheit 9 zur Auswertung der Funksignale. An das Lesegerät 8 sind ein oder mehrere Referenztransponder R,R1,R2 angekoppelt, die durch Aufmodulation entsprechender Referenztranspondersignale im Lesegerät 8 simuliert werden. Neben der direkten Kopplung des Lesegeräts 8 mit der Auswerteeinheit 9 ist eine Zwischenschaltung einer Verzögerungsleitung 11 zwischen diese beiden Komponenten möglich.

Im nicht sicherheitsrelevanten Wirkbereichsmodul 6 werden im Wesentlichen zwei Parameter ermittelt. Der erste Parameter ist die Auswertung der Identifikationsnummer ID des betreffenden RFID-Transponders 5 und der zweite Parameter ist der während des Empfangs der Identifikationsnummer ID gemessene Abstand zum RFID-Transponder 5. Diese beiden Parameter müssen dem Sicherheitsmodul 7 zur Verfügung stehen.

Um den ermittelten Parametern vertrauen zu können, werden unabhängig von den laufenden Messungen zu den RFID-Transpondern 5 Referenzmessungen mit den Referenztranspondern R,R1,R2 durchgeführt. Mit diesen Referenzmessungen werden die Hardware- und Softwarekomponenten des Wirkbereichsmoduls 6, die zur Ermittlung der benötigten Parameter zuständig sind, sowie die Übertragungskette Lesegerät 8 - Auswerteeinheit 9 - Sicherheitsmodul 7 überprüft. Das Sicherheitsmodul 7 hat eine konkrete zeitliche und wertgebundene Erwartungshaltung gegenüber den empfangenen Referenzwerten. Wird diese Erwartungshaltung verletzt, d.h., stellen sich die Erwartungswerte zeitlich oder wertgebunden nicht wie erwünscht ein, wird dem Wirkbereichsmodul 6 nicht weiter vertraut und der sichere Zustand eingenommen.

Hierzu wird unabhängig von den laufenden Messungen zu den RFID-Transpondern 5 in bestimmten Zeitpunkten ein simulierter Referenztransponder R,R1,R2 in das Lesegerät 8 eingespeist. Da das eingespeiste Referenztranspondersignal immer stärker ist als ein normales Transpondersignal, wird damit sichergestellt, dass in bestimmten Zeitintervallen eine Referenzmessung durchgeführt wird. Mit der Einspeisung des Referenzsignals erfolgt anschließend eine Bestimmung der Identifikationsnummer ID1 bzw. ID2 eines ersten bzw. zweiten Referenztransponders R1,R2 und des entsprechenden Abstandes zu diesen Referenztranspondern in der Auswerteeinheit 9.

Da sich der Referenztransponder R,R1,R2 im Wirkbereichsmodul 6 selbst befindet, muss der gemessene Abstand zum Referenztransponder 0 m entsprechen. Um aber einen Fehler zu erkennen, bei dem die Abstandsmessung stets den Referenzabstandswert 0 m liefert, ist zusätzlich die Verzögerungsleitung 11 vorgesehen, die den Referenzabstandswert um 3 m vergrößert. Es erfolgt jede Messung in den folgenden zwei Schritten, unabhängig davon, ob es sich um einen Referenztransponder R,R1,R2 oder um einen normalen RFID-Transponder 5 handelt.
Erster Schritt:
- Messung des Abstands ohne Verzögerungsleitung 11.
   Zweiter Schritt:
- Messung des Abstands mit Verzögerungsleitung 11.

Dies bedeutet, dass das Ergebnis jeder Messung neben der Identifikationsnummer ID einen ersten Abstandswert und einen um drei Meter vergrößerten Abstandswert liefert. Mit der Verzögerungsleitung 11 kann zusätzlich der Wertebereich vergrößert werden und eine zusätzliche Aussage über die Messung selbst gemacht werden.

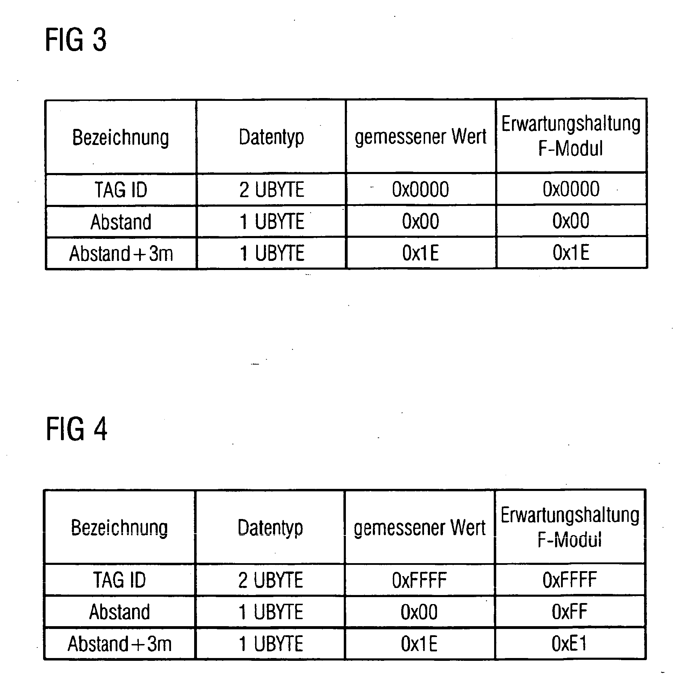

Zumindest sollten zwei Referenztransponder R1,R2 vorgesehen werden, deren Signale alternierend in bestimmten zeitlichen Abständen x in das Lesegerät 8 eingespeist werden. Ihre Identifikationsnummern ID1,ID2 sind gemäß FIG 3 und 4 mit 0x0000 und 0xFFF so gewählt, dass sie den gesamten Bereich aller RFID-Transponder 5 in der Anlage abdecken und das Einfrieren eines Bits erkennen lassen. Um den Wertebereich der Abstandsmessung abzudecken, wird in einer Referenzmessung zusätzlich der gemessene Abstand vom maximalen Wertebereich subtrahiert - wie in der Tabelle gemäß FIG 4 für den Referenztransponder R2 dargestellt. In der Tabelle gemäß FIG 3 sind außerdem die gemessenen Abstandswerte des Referenztransponders R1 sowie die dazugehörigen Erwartungswerte abgebildet.

Das erfindungsgemäße mobile Bediengerät 4 ist so ausgelegt, dass alle Messdaten des Wirkbereichsmoduls 6 ohne Zwischenspeicherung zum Sicherheitsmodul 7 durchgereicht werden, d.h., die Messwerte zum Referenztransponder R,R1,R2 nehmen denselben Weg wie der Messwert des RFID-Transponders 5 der Anlage.

## Patentansprüche

1. Verfahren zum Einsatz eines mobilen Bediengeräts (4), das ein Lesegerät (8) zum Empfang von Funksignalen und eine Auswerteeinheit (9) zur Auswertung der Funksignale aufweist und mit dem mindestens eine Maschine (2) sicherheitsrelevant in einer Anlage bedienbar ist, wobei die Bedienung innerhalb eines der Maschine zugeordneten Wirkbereichs (WB) erfolgt der von einem oder mehreren RFID-Transpondern (5) begrenzt wird wobei die Funksignale von einem im Empfangsbereich des Lesegeräts (8) befindlichen RFID-Transponder (5) vom Lesegerät (8) empfangen werden und wobei die Auswerteeinheit (9) die Funksignale erhält und daraus die Identifikationsnummer (ID) dieses RFID-Transponders (5) und seinen Abstand zum Bediengerät (4) bestimmt und diese Daten an ein Sicherheitsmodul (7) im Bediengerät (4) weiter leitet, **dadurch gekennzeichnet, dass** das Sicherheitsmodul (7) über dieselbe Übertragungskette Lesegerät (8) - Auswerteeinheit (9) - Sicherheitsmodul (7) von mindestens einem Referenztransponder (R,R1,R2) dessen Identifikationsnummer (ID,ID1,ID2) und Abstand in vorbestimmten zeitlichen Abständen empfängt, und dass überprüft wird, ob die Daten des Referenztransponders (R,R1,R2) hinsichtlich der Identifikationsnummer (ID,ID1,ID2) und des Abstands sowie der vorbestimmten zeitlichen Abstände erwartungsgemäß vom Sicherheitsmodul (7) empfangen werden.

2. Verfahren nach Anspruch 1, **dadurch gekennzeichnet, dass** die Referenztransponder (R,R1,R2) durch Aufmodulation entsprechender Referenztranspondersignale im Lesegerät(2) simuliert werden.

3. Verfahren nach Anspruch 1 oder 2, **dadurch gekennzeichnet, dass** einem ersten (R1) und einem zweiten (R2) der Referenztransponder (R,R1,R2) jeweils eine Identifikationsnummer (ID1 bzw. ID2) zugeordnet wird und durch diese beiden Identifikationsnummern (ID1,ID2) der gesamte Bereich von Identifikationsnummern (ID) der in der Anlage befindlichen RFID-Transponder (5) abgedeckt wird.

4. Verfahren nach Anspruch 3, **dadurch gekennzeichnet, dass** die im Lesegerät (8) aufmodulierten Referenztranspondersignale durch dem Lesegerät (8) nachgeschaltete Mittel (11) verzögert werden, durch die ein zusätzlicher Abstand simuliert wird.

5. Verfahren nach einem der vorangehenden Ansprüche, **dadurch gekennzeichnet, dass** die Referenztranspondersignale des ersten Referenztransponders (R1) und des zweiten Referenztransponders (R2) alternierend im Lesegerät (8) aufmoduliert werden.

6. Verfahren nach einem der vorangehenden Ansprüche, **dadurch gekennzeichnet, dass** im Sicherheitsmodul (7) für den ersten (R1) und zweiten Referenztransponder (R2) Erwartungswerte hinsichtlich der Identifikationsnummer und der Abstände mit und ohne Verzögerung der Referenztranspondersignale vorliegen, die mit über die Übertragungskette ermittelten Daten hinsichtlich der Identifikationsnummer und der Abstände mit und ohne Verzögerung verglichen werden.

7. Verfahren nach einem der vorangehenden Ansprüche, **dadurch gekennzeichnet, dass** für den zweiten Referenztransponder (R2) die beiden Erwartungswerte für den Abstand mit und ohne Verzögerung mathematisch aus dem maximalen Wertebereich und dem jeweils gemessenen Abstandswert gebildet werden.

8. Mobiles Bediengerät (4) mit einem Lesegerät (8) zum Empfang der von RFID-Transpondern (5) in einer Anlage ausgesendeten Funksignale und mit einer Auswerteeinheit (9) zur Auswertung dieser Funksignale und mit dem mindestens eine Maschine (2) sicherheitsrelevant in der Anlage bedienbar ist, wobei die Bedienung innerhalb eines der Maschine (2) zugeordneten Wirkbereichs (WB) vorgesehen ist, der von einem oder mehreren RFID-Transpondern (5) begrenzt wird, wobei die Auswerteeinheit (9) zur Bestimmung der Identifikationsnummer (ID) und des Abstands des jeweiligen RFID-Transponders (5) zum Bediengerät(4) aus den zu diesem vom Lesegerät (4) empfangenen Funksignalen dient, und wobei der Auswerteeinheit (9) ein Sicherheitsmodul (7) nachgeschaltet ist, das zur Überprüfung der korrekten Funktion des Bediengeräts (4) hinsichtlich Übertragung und Auswertung der empfangenen Funksignale in der Übertragungskette Lesegerät (8) - Auswerteeinheit (9) -Sicherheitsmodul (7) dient, **dadurch gekennzeichnet, dass** hierzu im Sicherheitsmodul (7) eine Überprüfung von Referenzwerten mindestens eines im Bediengerät (4) simulierten Referenztransponders (R,R1,R2) vorgesehen ist , wozu ein Vergleich dieser Referenzwerte mit entsprechenden Erwartungswerten in dem Sicherheitsmodul (7) vorgesehen ist, nachdem die Referenzwerte die Übertragungskette Lesegerät (8) - Auswerteeinheit (9) -Sicherheitsmodul (7) durchlaufen haben.

9. Mobiles Bediengerät (4) nach Anspruch 8, **dadurch gekennzeichnet, dass** der Vergleich im Sicherheitsmodul (7) eine zeitliche und wertgebundene Erwartungshaltung gegenüber den Referenzwerten beinhaltet.

10. Mobiles Bediengerät (4) nach Anspruch 8 oder 9, **dadurch gekennzeichnet, dass** als Referenzwerte eine Referenzidentifikationsnummer (ID1,ID2) und ein Referenzabstandswert des jeweiligen Referenztransponders (R1,R2) dienen.

11. Mobiles Bediengerät (4) nach einem der Ansprüche 8 bis 10, **dadurch gekennzeichnet, dass** Mittel (11) zur Verzögerung, vorgesehen sind, mit denen sich ein entsprechend vergrößerter Referenzabstandswert ergibt.

12. Mobiles Bediengerät (4) nach Anspruch 11, **dadurch gekennzeichnet, dass** die Mittel zur Verzögerung als Verzögerungsleitung (11) ausgeführt sind.

## Claims

1. Method for using a mobile operating device (4), which features a read device (8) for receiving radio signals and an evaluation unit (9) for evaluation of the radio signals and with which at least one machine (2) can be operated in a safety-relevant manner in a plant, with the operation being undertaken within an effective range (WB) assigned to the machine, which is delimited by one or more RFID transponders (5), with the radio signals of an RFID transponder (5) located in the receive zone of the read device (8) being received by the read device (8), and with the evaluation unit (9) receiving the radio signals, and from them determining the identification number (ID) of this RFID transponder (5) and its distance to the operating device (4) and forwarding this data to a safety module (7) in the operating device (4), **characterised in that** the safety module (7) receives via the same transmission chain of read device (8) - evaluation unit (9) - safety module (7) from at least one reference transponder (R, R1, R2) its identification number (ID, ID1, ID2) and distance at predetermined intervals, and that a check is made as to whether the data of the reference transponder (R, R1, R2) as regards the identification number (ID, ID1, ID2) and the distance as well as the predetermined intervals, are being received as expected by the safety module (7).

2. Method according to claim 1, **characterised in that** the reference transponders (R, R1, R2) are simulated by upwards modulation of corresponding reference transponder signals in the read device (2).

3. Method according to claim 1 or 2, **characterised in that** a first (R1) and a second (R2) of the reference transponders (R, R1, R2) is assigned an identification number (ID1 or ID2) respectively and the entire range of identification numbers (ID) of the RFID transponders (5) located in the plant is covered by these two identification numbers (ID1, ID2).

4. Method according to claim 3, **characterised in that** the reference transponder signals modulated up in the read device (8) are delayed by means (11) downstream from the read device (8) by which an additional distance is simulated.

5. Method according to one of the previous claims, **characterised in that** the reference transponder signals of the first reference transponder (R1) and of the second reference transponder (R2) are modulated up alternately in the read device (8).

6. Method according to one of the previous claims, **characterised in that** there are expected values in the safety module (7) for the first (R1) and second reference transponder (R2) in respect of the identification number and the distances with and without delay of reference transponder signals, which are compared with data determined via the transmission chain as regards the identification number and the distances with and without delay.

7. Method according to one of the previous claims, **characterised in that**, for the second reference transponder (R2) the two expected values for the distance with and without delay are formed mathematically from the maximum range of values and the measured distance value respectively.

8. Mobile operating device (4) with a read device (8) for receiving the radio signals sent out by RFID transponders (5) in a plant and with an evaluation unit (9) for evaluation of these radio signals and with which at least one machine (2) in the plant can be operated in a safety-relevant manner, with operation being provided within an effective range (WB) assigned to the machine (2) which is delimited by one or more RFID transponders (5), with the evaluation unit (9) being used for determining the identification number (ID) and the distance of the respective RFID transponder (5) to the operating device (4) from the radio signals for this received by the read device (4), and with the evaluation unit (9) having a safety module (7) connected downstream from it which is used for checking the correct function of the operating device (4) as regards transmission and evaluation of the received radio signals in the read device (8) - evaluation unit (9) - safety module (7) transmission chain, **characterised in that** a check is provided to this end in the safety module (7) of reference values of at least one reference transponder (R, R1, R2) simulated in the operating device (4), for which purpose a comparison of these reference values with corresponding expected values is provided in the safety module (7) after the reference values have passed through the read device (8) - evaluation unit (9) - safety module (7) transmission chain.

9. Mobile operating device (4) according to claim 8, **characterised in that** the comparison in the safety module (7) includes a time and value-linked expected relationship to the reference values.

10. Mobile operating device (4) according to claim 8 or 9, **characterised in that** a reference identification number (ID1, ID2) and a reference distance value of the respective reference transponder (R1, R2) serve as reference values.

11. Mobile operating device (4) according to one of claims 8 to 10, **characterised in that** means (11) are provided for delay, with which a correspondingly enlarged reference distance value is produced.

12. Mobile operating device (4) according to claim 11, **characterised in that** the means for delay are embodied as a delay line (11).

## Revendications

1. Procédé d'utilisation d'un appareil ( 4 ) de commande mobile, qui a un appareil ( 8 ) de lecture, pour la réception de signaux radio, et une unité ( 9 ) d'exploitation, pour l'exploitation des signaux radio, et par lequel au moins une machine ( 2 ) peut être commandée en sécurité dans une installation, la commande s'effectuant dans une zone ( WB ) d'action associée à la machine, qui est délimitée par un ou par plusieurs transpondeurs ( 5 ) RFID, les signaux radio étant reçus par l'appareil ( 8 ) de lecture, à partir d'un transpondeur ( 5 ) RFID se trouvant dans la zone d'action de l'appareil ( 8 ) de lecture, et dans lequel l'unité ( 9 ) d'exploitation reçoit les signaux radio et en détermine le numéro ( ID ) d'identification de ce transpondeur ( 5 ) RFID et sa distance à l'appareil ( 4 ) de commande et achemine ces données à un module ( 7 ) de sécurité de l'appareil ( 4 ) de commande, **caractérisé en ce que** le module ( 7 ) de sécurité reçoit, par la même chaîne de transmission appareil ( 8 ) de lecture - unité ( 9 ) d'exploitation - module ( 7 ) de sécurité d'au moins un transpondeur ( R, R1, R2 ) de référence, son numéro ( ID, ID1, ID2 ) d'identification et une distance à des intervalles de temps prescrits et **en ce que** l'on contrôle si les données du transpondeur ( R, R1, R2 ) de référence, en ce qui concerne le numéro ( ID, ID1, ID2 ) d'identification et la distance, ainsi que les intervalles de temps prédéterminés sont reçues, conformément aux attentes, par le module ( 7 ) de sécurité.

2. Procédé suivant la revendication 1, **caractérisé en ce que** les transpondeurs ( R, R1, R2 ) de référence simulent dans l'appareil ( 2 ) de lecture par modulation de signaux de transpondeur de référence correspondants.

3. Procédé suivant la revendication 1 ou 2, **caractérisé en ce qu'**un numéro ( ID1 ou ID2 ) d'identification est affecté respectivement à un premier ( R1 ) et à un deuxième ( R2 ) des transpondeurs ( R, R1, R2 ) de référence, et par ces deux numéros ( ID1, ID2 ), on recouvre toute la plage des numéros ( ID ) d'identification des transpondeurs ( 5 ) RFID se trouvant dans l'installation.

4. Procédé suivant la revendication 3, **caractérisé en ce que** l'on retarde, par des moyens ( 11 ) qui sont montés en aval de l'appareil ( 8 ) de lecture et par lesquels une distance supplémentaire est simulée, les signaux de transpondeurs de référence modulés dans l'appareil ( 8 ) de lecture.

5. Procédé suivant l'une des revendications précédentes, **caractérisé en ce que** l'on module, en alternance dans l'appareil ( 8 ) de lecture, les signaux de transpondeurs de référence du premier transpondeur ( R1 ) de référence et du deuxième transpondeur ( R2 ) de référence.

6. Procédé suivant l'une des revendications précédentes, **caractérisé en ce que** il y a dans le module ( 7 ) de sécurité, pour le premier ( R1 ) et le deuxième transpondeur ( R2 ) de référence, des valeurs auxquelles on s'attend, en ce qui concerne le numéro d'identification et les distances, avec ou sans retard, des signaux de transpondeurs de référence, valeurs que l'on compare à des données déterminées par la chaîne de transmission et concernant les numéros d'identification et les distances avec et sans retard.

7. Procédé suivant l'une des revendications précédentes, **caractérisé en ce que**, pour le deuxième transpondeur ( R2 ) de référence, on forme les deux valeurs auxquelles on s'attend, de la distance avec ou sans retard, mathématiquement, à partir de la plage de valeur maximum et de la valeur de distance mesurée respectivement.

8. Appareil ( 4 ) de commande mobile comprenant un appareil ( 8 ) de lecture, pour la réception des signaux radio émis dans une installation par des transpondeurs RFID et une unité ( 9 ) d'exploitation de ces signaux radio, appareil par lequel, au moins une machine ( 2 ) peut être commandée en sécurité dans l'installation, la commande étant prévue à l'intérieur d'une zone ( WB ) d'action associée à la machine et délimitée par un ou par plusieurs transpondeurs ( 5 ) RFID, l'unité ( 9 ) d'exploitation servant à la détermination du numéro ( ID ) d'identification et de la distance du transpondeur ( 9 ) RFID respectif à l'appareil ( 4 ) de service, à partir des signaux reçus par l'appareil ( 4 ) de lecture, à partir de celui-ci, toute la plage des numéros ( ID ) d'identification des transpondeurs ( 5 ) RFID se trouvant dans l'installation étant recouverte par ces deux numéros ( ID1, ID2 ) d'identification et il est monté en aval de l'unité ( 2 ) d'exploitation, un module ( 7 ) de sécurité, qui sert à contrôler le fonctionnement correct de l'appareil ( 4 ) de service, en ce qui concerne la transmission et l'exploitation des signaux radio reçus dans la chaîne de transmission, appareil ( 8 ) de lecture - unité ( 9 ) d'exploitation - module ( 7 ) de sécurité, **caractérisé en ce qu'**il est prévu à cet effet dans le module ( 7 ) de sécurité, un contrôle de valeurs de référence d'au moins un transpondeur ( R, R1, R2 ) de référence simulé dans l'appareil ( 4 ) de service, une comparaison de ces valeurs de référence à des valeurs correspondantes auxquelles on s'attend étant prévue à cet effet dans le module ( 7 ) de sécurité, après que les valeurs de référence ont traversé la chaîne de transmission, appareil ( 8 ) de lecture - unité ( 9 ) d'exploitation - module ( 7 ) de sécurité.

9. Appareil ( 4 ) de service mobile suivant la revendication 8, **caractérisé en ce que** la comparaison dans le module ( 7 ) de sécurité comporte un maintien, dans le temps et lié aux valeurs, de ce que l'on attend par rapport aux valeurs de référence.

10. Appareil ( 4 ) de service mobile suivant la revendication 8 ou 9, **caractérisé en ce qu'**un numéro ( ID1, ID2 ) d'identification de référence et une valeur de distance de référence du transpondeur ( R1, R2 ) de référence respective servent de valeurs de référence.

11. Appareil ( 4 ) de service mobile suivant l'une des revendications 8 à 10, **caractérisé en ce qu'**il est prévu des moyens ( 11 ) de retard, par lesquels on obtient une valeur de distance de référence agrandie d'une manière correspondante.

12. Appareil ( 4 ) de service mobile suivant la revendication 11, **caractérisé en ce que** les moyens de retard sont réalisés sous la forme d'une ligne ( 11 ) à retard.
